# EUROPÄISCHE PATENTSCHRIFT

(11) **EP 0 744 356 B1**
(45) Veröffentlichungstag und Bekanntmachung des Hinweises auf die Patenterteilung: **22.07.1998**
(21) Anmeldenummer: 96106803.8
(22) Anmeldetag: 30.04.1996
(51) Int. Cl.: B65D 81/38, B65D 25/30, A47J 47/14

(54) **Behälter und Verfahren zu seiner Herstellung**
Container and method of forming such a container
Conteneur et procédé de formation d'un tel conteneur

(30) Priorität: 24.05.1995 DE 19519000
(43) Veröffentlichungstag der Anmeldung: 27.11.1996
(73) Patentinhaber: ETOL Vertriebs GmbH, 77728 Oppenau (DE)
(72) Erfinder: Eckert, Wolf, 77704 Oberkirch (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 4 339 557
- DE-U- 9 402 365
- US-A- 4 225 052

## Beschreibung

Die Erfindung betrifft ein Verfahren zur Herstellung eines Behälters mit wenigstens einem stabförmigen Funktionsteil, wie Tragegriff, Gelenkachse od.dgl., indem zunächst eine dünnwandige Behälterhülle aus Kunststoff durch Tiefziehen, Spritzen, oder Blasen von wenigstens zwei Schalen hergestellt, anschließend wenigstens eine der Schalen mit einem dem Behälter die Formstabilität verleihenden Schaumstoff ausgeschäumt wird und schließlich die Schalen miteinander verbunden werden. Ferner betrifft die Erfindung einen danach hergestellten Behälter.

Die Erfindung befaßt sich insbesondere mit Isolierbehältern, wie sie für die kurzfristige Aufbewahrung und vor allem für den Transport von gegarten und angerichteten Speisen verwendet werden, wobei die Behälter so ausgelegt sein können, daß sie eine oder auch mehrere Portionen aufnehmen. In der einfachsten Ausführung bestehen diese Transportbehälter aus Schaumkunststoff, sind dann aber nur dafür geeignet, portionierte Speisen in einer eigenen Verpackung aufzunehmen. Werden Speisen hingegen unmittelbar von dem Behälter aufgenommen, muß eine gas- und flüssigkeitsdichte, gegebenenfalls auch geruchsdichte Ausführung vorgesehen werden. Dies erfordert eine zweischalige Bauweise mit einer glatten, die Dichtheit gewährleistenden Hülle und einer isolierenden Füllung, z.B. aus Schaumstoff. Die Behälter sollten ferner stapelbar ausgebildet sein, um einen raumsparenden und funktionssicheren Transport und eine platzsparende Lagerung mehrerer solcher Behälter zu ermöglichen. Die Herstellung solcher Behälter erfolgt derart, daß zunächst die dünnwandige Hülle in Form von zwei Schalen durch Tiefziehen, Spritzen, oder Blasen hergestellt und anschließend die Schalen bzw. die Hülle ausgeschäumt wird. Der Schaumstoff sorgt nicht nur für die notwendigen Isolationseigenschaften, sondern auch für die Formstabilität des Behälters.

Um diese Behälter handhaben und manuell transportieren zu können, müssen sie mit Griffen ausgestattet sein, die bei den bekannten Ausführungsformen als gesonderte Bauteile nachträglich befestigt werden, wie dies bei dem gattungsgemäßen Behälter nach der US-A-4 225 052 der Fall ist Dies ist kostenaufwendig. Zudem ist an den Bestigungsstellen der Griffe die Dichtheit der Hülle nicht gewährleistet. Gleiches gilt für andere Funktionsteile, beispielsweise Lagerachsen für die Anlenkung eines Behälterdeckels an einem Behälter-Unterteil od.dgl.

Die Nachteile der Verletzung der Hülle durch nachträglich angebrachte Griffe werden bei einer bekannten Ausführung (DE-U1-94 02 365) dadurch behoben, daß in das Unterteil des Behälters an gegenüberliegenden Seiten Griffmulden in die Hülle eingeformt sind, die mit dem isolierenden Schaumstoff hinterschäumt sind, so daß sie ausreichend stabil sind. Von Nachteil ist, daß der Behälter stets nur mit beiden Händen getragen werden kann und man ihn stets vor sich her tragen muß.

Der Erfindung liegt die Aufgabe zugrunde, ein Verfahren zur Herstellung eines solchen Behälters vorzuschlagen, ohne daß die Gas- und Feuchtigkeitsdichtheit durch die anzubringenden Funktionsteile beeinträchtigt wird.

Diese Aufgabe wird erfindungsgemäß dadurch gelöst, daß an wenigstens einer Schale der Hülle zwei mit Abstand voneinander angeordnete Ausformungen nach Art von Lagerböcken und an deren einander zugekehrten Seiten Vertiefungen mit einer gemeinsamen Achse ausgebildet werden, daß die wenigstens eine Schale im noch verformungsfähigen Zustand im Richtung der Achse der Vertiefungen unter Spreizen der Lagerböcke verformt und das stabförmige Funktionsteil zwischen die Lagerböcke eingeführt wird, anschliessend die Lagerböcke mit den Vertiefungen über die Enden des Funktionsteils durch Rückformen der Schale geschoben werden und daraufhin die Schale ausgeschäumt wird.

Die durch Tiefziehen, Spritzen oder Blasen erzeugte Hülle ist unmittelbar nach ihrer Herstellung noch plastisch und gut verformbar. Dieser Effekt wird bei dem erfindungsgemäßen Verfahren ausgenutzt, indem die Schale derart verformt wird, daß die die Lagerböcke bildenden Ausformungen einen größeren Abstand voneinander aufweisen als im starren Endzustand. Die Lagerböcke lassen sich gleichsam spreizen, und zwar soweit, daß das stabförmige Funktionsteil, zum Beispiel ein Tragegriff, eine Gelenkachse od.dgl., zwischen die Lagerböcke eingeführt werden kann. Durch Rückformen oder Rückfedern der Schale werden die Vertiefungen über die Enden des starrförmigen Lagerteils geschoben, bis die Lagerböcke ihre Endposition erhalten. Anschließend wird die Schale bzw. die Hülle ausgeschäumt und erhält dadurch ihre endgültige Stabilisierung und Formsteifigkeit. In diesem Zustand sind dann die eingelegten Funktionsteile unlösbar mit dem Behälter verbunden, wobei die Lagerböcke erhebliche Kräfte aufnehmen können. Die Hülle bleibt dabei völlig unversehrt, so daß die Flüssigkeits- und Gasdichtheit nicht beeinträchtigt ist.

Die Erfindung betrifft ferner einen Behälter mit wenigstens einem stabförmigen Funktionsteil, bestehend aus einer dünnwandigen dichten Hülle und einem Kern aus einem formstabilen Schaumstoff, wobei das Funktionsteil an Ausformungen des Behälters festgelegt ist. Ein solcher Behälter zeichnet sich erfindungsgemäß dadurch aus, daß daß die Ausformungen nach Art von Lagerböcken als integraler Bestandteil der Hülle ausgebildet sind, die an einander zugekehrten Seiten je eine dem Querschnitt des stabförmigen Funktionsteils angepaßte, achsgleiche Vertiefung aufweisen, und daß das stabförmige Funktionsteil durch Spreizen der Lagerböcke in die Vertiefungen einsetzbar und nach Rückfedern der Hülle und Ausschäumen derselben gehalten ist.

Bei den solchermaßen eingesetzten Funktionsteilen kann es sich um starre Tragegriffe oder um Lagerachsen für schwenkbare Tragegriffe, Gelenkachsen von zwei miteinander schwenkbar verbundenen Behälterteilen od.dgl. handeln.

Mit Vorteil entspricht der Abstand des Bodens der fluchtenden Vertiefungen an den Lagerböcken etwa der Länge des stabförmigen Funktionsteils so daß dieses auch axial - gegebenenfalls mit geringem Spiel - festgelegt ist.

Vorzugsweise besteht das Funktionsteil aus einem Kunststoffrohr.

Ein Behälter des vorgenannten Aufbaus ist, wie bereits angedeutet, vorzugsweise als Isolationsbehälter für die Lagerung und den Transport von Speisen ausgebildet. Er besteht dann üblicherweise aus einem Oberteil und einem Unterteil und das eingesetzte Funktionsteil ist vorzugsweise ein Tragegriff.

Ein solcher Behälter zeichnet sich gemäß einer weiteren Ausführungsform dadurch aus, daß im mittigen Bereich des Oberteils die Lagerböcke für einen mittigen Tragegriff vorgesehen sind, und daß an gegenüberliegenden Seiten des Oberteils jeweils zwei Lagerböcke mit achsgleichen Vertiefungen an ihren einandern zugekehrten Seiten zur Aufnahme je eines Tragegriffs angeordnet sind, deren Achsen senkrecht zur Achse des mittigen Tragegriffs verlaufen.

Diese Ausführungsform hat den Vorteil, daß der Behälter von einer einzelnen Person entweder an dem mittigen Tragegriff oder an den beiden äußeren Griffen getragen werden kann. Die beiden äußeren Tragegriffe geben ferner die Möglichkeit, daß der Behälter von zwei Personen transportiert werden kann, die ihn an jeweils einem Tragegriff ergreifen.

Nachstehend ist die Erfindung anhand eines in der Zeichnung wiedergegebenen Ausführungsbeispiels beschrieben. Hierbei zeigen:

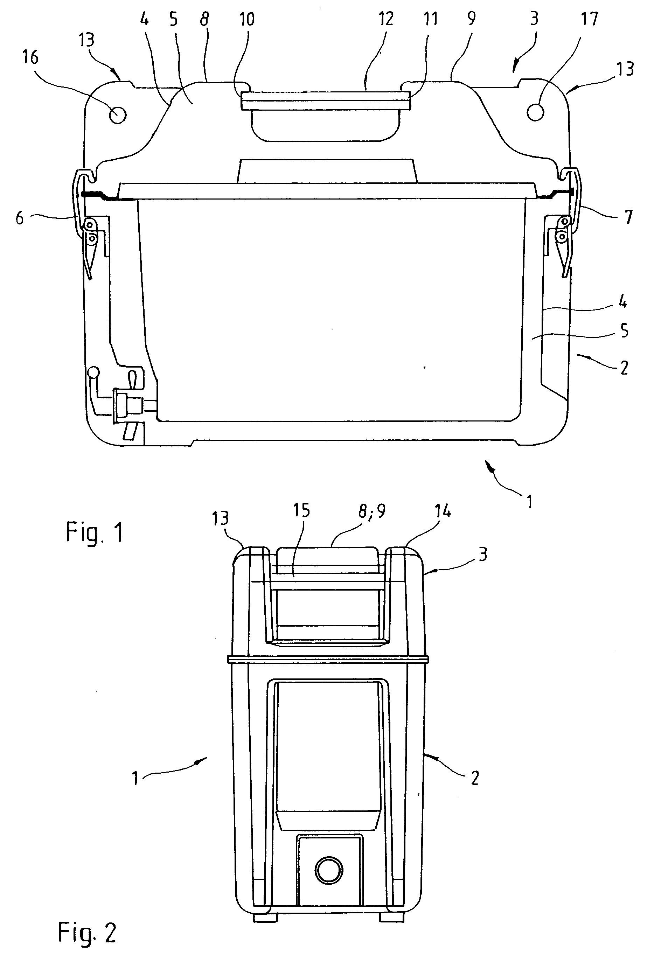

- Figur 1:: einen Schnitt eines Behälters und
- Figur 2:: eine Seitenansicht des Behälters gemäß Figur 1.

Der Behälter 1 ist als Isolierbehälter, insbesondere als Transportbehälter für warme Speisen ausgebildet. Er nimmt die Speisen entweder direkt oder in eingestellten Gefäßen oder in portionierten Einzelpackungen auf. Er besteht aus einem Unterteil 2 und einem Oberteil 3. Beide wiederum bestehen aus einer zweischaligen, gas- und flüssigkeitsdichten Hülle 4 und einem thermisch isolierenden Kern 5, z.B. einem Schaumstoff.

Das Oberteil 3 ist an dem Unterteil 2 durch entsprechende Konturierung im Randbereich der einander gegenüberliegenden Stirnseiten positioniert und beide Behälterteile sind durch Überwurfbügel 6,7 fest miteinander verbunden.

Das Oberteil 3 weist in seinem Zentrum zwei mit Abstand voneinander angeordnete Ausformungen 8,9 auf, die in Form von Lagerböcken ausgebildet sind und zu diesem Zweck an den einander zugekehrten Seiten eingeformte Vertiefungen 10, 11 besitzen, die in einer gemeinsamen Achse miteinander fluchten und ein stabförmiges Funktionsteil in Form eines rohrförmigen Tragegriffs 12 aufnehmen.

Der Behälter weist an zwei gegenüberliegenden Seiten - beim gezeigten Ausführungsbeispiel an den Schmalseiten - jeweils zwei weitere Ausformungen 13, 14 in Form von Lageraugen auf, zwischen die gleichfalls je ein rohrförmiger Tragegriff 15 eingesetzt ist. Der Behälter läßt sich also mit einer Hand oder mit beiden Händen oder auch von zwei Personen tragen.

Wie bereits gesagt, bestehen das Oberteil 3 und das Unterteil 2 des Behälters aus jeweils zwei miteinander zu einer Hülle verbundenen dünnwandigen Schalen und einem die notwendigen Isoliereigenschaften und die Formstabilität gewährleistenden Kern 5 aus Schaumstoff. Die Herstellung erfolgt derart, daß zunächst die Schalen durch Tiefziehen oder Spritzen erzeugt und anschließend ausgeschäumt werden. Anläßlich der Herstellung der Schale für das Oberteil 3 werden die beiden zentrischen Lagerböcke 8, 9 und die beiden an den Schmalseiten vorgesehenen Lagerböcke 13, 14 sowie die einander zugekehrten, achsfluchtenden Vertiefungen 10, 11 bzw. 16, 17 ausgeformt. Unmittelbar nach der Herstellung der Schale 4 des Oberteils 3 werden durch entsprechendes Verformen der Schalen bzw. der Lagerböcke 8, 9 die Tragegriffe 12, 15 zwischen die Lagerböcke eingeführt und durch Rückformen oder Rückfedern von den Vertiefungen 10, 11 bzw. 16, 17 aufgenommen. Erst anschließend werden die Schale bzw. die Hülle ausgeschäumt. Nach dem Erstarren sind dann die Tragegriffe 12 am Oberteil fest verankert.

In gleicher Weise lassen sich auch andere Funktionsteile ohne äußere Verletzung der Hülle anbringen, beispielsweise auch die Lagerachsen für die Überwurfbügel 6,7 oder andere Gelenkachsen, z.B. zwischen Oberteil 3 und Unterteil 2.

## Patentansprüche

1. Verfahren zur Herstellung eines Behälters mit wenigstens einem stabförmigen Funktionsteil (12,15), wie Tragegriff, Gelenkachse od.dgl., indem zunächst eine dünnwandige Behälterhülle (4) aus Kunststoff durch Tiefziehen, Spritzen, oder Blasen von wenigstens zwei Schalen hergestellt, anschließend wenigstens eine der Schalen mit einem dem Behälter die Formstabilität verleihenden Schaumstoff (5) ausgeschäumt wird und schließlich die Schalen miteinander verbunden werden, dadurch gekennzeichnet, daß an wenigstens einer Schale der Hülle zwei mit Abstand voneinander angeordnete Ausformungen (8,9) nach Art von Lagerböcken und an deren einander zugekehrten Seiten Vertiefungen (10,11) mit einer gemeinsamen Achse ausgebildet werden, daß die wenigstens eine Schale im noch verformungsfähigen Zustand in Richtung der Achse der Vertiefungen (10,11) unter Spreizen der Lagerböcke (8,9) verformt und das stabförmige Funktionsteil (12,15) zwischen die Lagerböcke (8,9) eingeführt wird, anschliessend die Lagerböcke (8,9) mit den Vertiefungen (10,11) über die Enden des Funktionsteils (12,15) durch Rückformen der Schale geschoben werden und daraufhin die Schale ausgeschäumt wird.

2. Behälter mit wenigstens einem stabförmigen Funktionsteil (12,15), bestehend aus einer dünnwandigen dichten Hülle (4) und einem Kern aus einem formstabilen Schaumstoff (5), wobei das Funktionsteil (12,15) an Ausformungen (8,9) des Behälters festgelegt ist, dadurch gekennzeichnet, daß die Ausformungen (8,9) nach Art von Lagerböcken als integraler Bestandteil der Hülle (4) ausgebildet sind, die an einander zugekehrten Seiten je eine dem Querschnitt des stabförmigen Funktionsteils (12,15) angepaßte, achsgleiche Vertiefung (10,11) aufweisen, und daß das stabförmige Funktionsteil (12,15) durch Spreizen der Lagerböcke (8,9) in die Vertiefungen (10,11) einsetzbar und nach Rückfedern der Hülle (4) und Ausschäumen derselben gehalten ist.

3. Behälter nach Anspruch 2, dadurch gekennzeichnet, daß der Abstand des Bodens der fluchtenden Vertiefungen (10,11) an den Lagerböcken (8,9) etwa der Länge des stabförmigen Funktionsteils (12,15) entspricht.

4. Behälter nach Anspruch 2 oder 3, dadurch gekennzeichnet, daß das Funktionsteil (12,15) aus einem Rohr, vorzugsweise aus Kunststoff gebildet ist.

5. Behälter nach einem der Ansprüche 2 bis 4, dadurch gekennzeichnet, daß er als Isolationsbehälter für die Lagerung und den Transport von Speisen ausgebildet ist.

6. Behälter nach einem der Ansprüche 2 bis 5, dadurch gekennzeichnet, daß der Behälter (1) aus einem Oberteil (3) und einem Unterteil (2) besteht und das Funktionsteil (12,15) ein Tragegriff ist.

7. Behälter nach einem der Ansprüche 2 bis 6, dadurch gekennzeichnet, daß im mittigen Bereich des Oberteils (3) die Lagerböcke (8,9) für einen mittigen Tragegriff (12) vorgesehen sind, und daß an gegenüberliegenden Seiten des Oberteils jeweils zwei Lagerböcke (13,14) mit achsgleichen Vertiefungen an ihren einandern zugekehrten Seiten zur aufnahme je eines Tragegriffs (15) angeordnet sind, deren Achsen senkrecht zur Achse des mittigen Tragegriffs (12) verlaufen.

## Claims

1. Process for producing a container having at least one rod-like functional part (12, 15), such as a carrying handle, articulated spindle, etc., in that firstly a thin-walled container sleeve (4) is produced from plastic by deep drawing, injection moulding or blow moulding of at least two shells, subsequently at least one of the shells is foamed with a foam (5) giving the container dimensional stability and finally the shells are interconnected, characterized in that on at least one shell of the sleeve are formed two spaced shapes (8, 9) in the manner of bearing blocks and on the facing sides thereof depressions (10, 11) having a common axis, that the at least one shell in the still deformable state is deformed in the direction of the axis of the depressions (10, 11), accompanied by the spreading apart of the bearing blocks (8, 9), and the rod-like functional part (12, 15) is introduced between the bearing blocks (8, 9), then the bearing blocks (8, 9) with the depressions (10, 11) are engaged over the ends of the functional part (12, 15) by shaping back the shell and then the shell is foamed.

2. Container having at least one rod-like functional part (12, 15), comprising a thin-walled, dense sleeve (4) and a core of a dimensionally stable foam (5), in which the functional part (12, 15) is fixed to shapes (8, 9) of the container, characterized in that the shapes (8, 9) in the manner of bearing blocks are constructed as an integral component of the sleeve (4), which have on the facing sides in each case an equiaxial depression (10, 11) adapted to the cross-section of the rod-like functional part (12, 15) and that the rod-like functional part (12, 15) is insertable in the depressions (10, 11) by spreading apart the bearing blocks (8, 9) and is held therein following the spring-back recovery of the sleeve (4) and the foaming thereof.

3. Container according to claim 2, characterized in that the spacing of the bottom of the aligned depressions (10, 11) at the bearing blocks (8, 9) roughly corresponds to the length of the rod-like functional part (12, 15).

4. Container according to claim 2 or 3, characterized in that the functional part (12, 15) is formed by a tube, preferably of plastic.

5. Container according to one of the claims 2 to 4, characterized in that it is constructed as an insulated container for the storage and transportation of meals.

6. Container according to one of the claims 2 to 5, characterized in that the container (1) comprises an upper part (3) and a lower part (2) and the functional part (12, 15) is a carrying handle.

7. Container according to one of the claims 2 to 6, characterized in that in the central area of the upper part (3) are provided the bearing blocks (8, 9) for a central carrying handle (12) and that on opposite sides of the upper part are provided in each case two bearing blocks (13, 14) with equiaxial depressions on their facing sides for receiving in each case one carrying handle (15), whose axes are perpendicular to the axis of the central carrying handle (12).

## Revendications

1. Procédé de fabrication d'un contenant comprenant au moins une pièce fonctionnelle (12,15) en forme de tige, telle que poignée de préhension, axe articulé ou similaire, procédé selon lequel on fabrique d'abord une enveloppe de contenant (4) à paroi mince en matière plastique par thermoformage, injection ou extrusion-soufflage d'au moins deux coquilles, on emplit ensuite au moins une des coquilles avec une mousse alvéolaire conférant au contenant sa stabilité de forme, et finalement on relie les coquilles l'une à l'autre, caractérisé en ce qu'au moins sur une des coquilles de l'enveloppe on réalise deux conformations (8,9) à la manière de supports disposés à distance l'un de l'autre et on ménage dans leurs faces en regard des évidements (10,11) sur un axe commun, en ce que l'on déforme cette coquille au moins dans son état encore déformable en direction de l'axe des évidements (10,11) par tension des supports (8,9) et que l'on introduit la pièce fonctionnelle (12,15) en forme de tige entre les supports (8,9), qu'ensuite les supports (8,9) présentant les évidements (10,11) sont glissés pardessus les extrémités de la pièce fonctionnelle (12,15) par reformage de la coquille et qu'ensuite on remplit la coquille avec de la mousse.

2. Contenant présentant au moins une pièce fonctionnelle (12,15) en forme de tige, composé d'une enveloppe (4) étanche à paroi mince et d'un noyau en produit alvéolé (5) à stabilité de forme, la pièce fonctionnelle (12,15) étant fixée à des conformations (8,9) du contenant, caractérisé en ce que les conformations (8,9) sont réalisées à la manière de supports comme parties intégrantes de l'enveloppe (4) présentant chacune sur des faces en regard un évidement (10,11) adapté à la section de la pièce fonctionnelle (12,15) et de même axe, et en ce que la pièce fonctionnelle (12,15) en forme de tige peut être introduite dans les évidements (10,11) par tension des supports (8,9) et maintenue après détente de l'enveloppe (4) et remplissage de celle-ci avec de la mousse.

3. Contenant selon la revendication 2, caractérisé en ce que la distance du fond des évidements 10,11) alignés sur les supports (8,9) correspond sensiblement à la longueur de la pièce fonctionnelle (12,15) en forme de tige.

4. Contenant selon la revendication 2 ou 3, caractérisé en ce que la pièce fonctionnelle (12,15) est constituée par un tube, de préférence en matière plastique.

5. Contenant selon l'une quelconque des revendications 2 à 4, caractérisé en ce qu'il est conformé en contenant isolant pour le stockage et le transport d'aliments.

6. Contenant selon l'une quelconque des revendications 2 à 5, caractérisé en ce que le contenant (1) consiste en une partie supérieure (3) et une partie inférieure (2) et que la partie fonctionnelle (12,15) est une poignée de préhension.

7. Contenant selon l'une quelconque des revendications 2 à 6, caractérisé en ce que dans la zone médiane de la partie supérieure (3) les supports (8,9) sont prévus pour une poignée de préhension (12) médiane, et en ce que sur des côtés opposés de la partie supérieure sont disposés à chaque fois deux supports (13,14) comportant des évidements d'axe identique sur leurs faces en regard pour recevoir à chaque fois une poignée de préhension (15), dont les axes sont perpendiculaires à l'axe de la poignée de préhension médiane (12).
